# EUROPÄISCHE PATENTANMELDUNG

(11) **EP 0 848 378 A1**
(43) Veröffentlichungstag der Anmeldung: **17.06.1998**
(21) Anmeldenummer: 97120512.5
(22) Anmeldetag: 22.11.1997
(51) Int. Cl.: G11B 5/702

(54) **Magnetische Aufzeichnungsträger**

(30) Priorität: 12.12.1996 DE 19651672
(71) Anmelder: EMTEC Magnetics GmbH, 67059 Ludwigshafen (DE)
(72) Erfinder: Kress, Ria, Dr., 67063 Ludwigshafen (DE); Kohl, Albert, 67229 Laumersheim (DE); Lehner, August, 67127 Rödersheim-Gronau (DE); Lenz, Werner, Dr., 67098 Bad Dürkheim (DE); Hitzfeld, Michael, Dr., 76185 Karlsruhe (DE)

(57) **Zusammenfassung**

Magnetische Aufzeichnungsträger I, enthaltend ein nichtmagnetisches Trägermaterial II und eine magnetisierbare Schicht III, wobei die magnetisierbare Schicht III ferromagnetische Pigmente IV und ein System aus polymeren Massen V enthält, wobei das System aus polymeren Massen V
a) 3 bis 35 Gew.-% eines Polymerisats VI erhältlich durch Umsetzung von
   1) einem Polymerisat VII aus
      a) 80 bis knapp 100 mol-% eines C₁-C₂₅-Alkylesters einer a,b-ungesättigten Carbonsäure,
      b) 0 bis 20 mol-% eines oder mehrerer weiterer Monomerer und
      c) einem Starter und/oder Regler, durch welchen die Mehrzahl der Polymerketten des Polymerisats VII an einem ihrer Enden durch eine Hydroxylgruppe terminiert wird,
   2) mit einem mehrwertigen nicht-aromatischen Isocyanat VIII zu einem Umsetzungsprodukt IX, wobei die Menge der Isocyanatgruppen 1,2 bis 3,9 mol pro Mol der Hydroxylgruppen von VII beträgt,
   3) Umsetzung von IX mit
      a) einer gegenüber Isocyanaten reaktive Gruppen enthaltenden Verbindung X zu einem Umsetzungsprodukt XI, wobei die Menge der reaktiven Gruppen 2 bis 7 mol pro Mol der in IX noch vorhandenen freien Isocyanat-Gruppen beträgt
         und
         Umsetzung von XI mit einer Verbindung XII zum Polymerisat VI, die mit den noch freien reaktiven Gruppen in XI reagiert und durch welche ionische oder ionogene Gruppen in XI eingeführt werden,
         oder
      b) einer gegenüber Isocyanaten reaktive Gruppen enthaltenden Verbindung XIII, durch die ionische oder ionogene Gruppen in IX eingeführt werden, zum Polymerisat VI
      und
b) 5 bis 97 Gew.-% eines basische Gruppen enthaltenden Polymeren XIV mit einem Molekulargewicht von 30000 bis 2000000, erhältlich durch Umsetzung von
   1) einem polymeren Diol XV mit einem Molekulargewicht (Zahlenmittel) von 400 bis 10000, mit
   2) 0,3 bis 1 Mol pro Mol des Diols XV eines Diols XVI mit 2 bis 18 Kohlenstoffatomen und
   3) 0,01 bis 1 Mol pro Mol des Diols XV eines mehrwertigen Alkohols XVII mit mindestens drei OH-Gruppen und 3 bis 25 Kohlenstoffatomen,
   4) 1,3 bis 13 Mol pro Mol des Diols XV eines Diisocyanats XVIII mit 6 bis 30 Kohlenstoffatomen und
   5) 0,09 bis 2 Mol pro Mol des Diols XV eines Aminoalkohols XIX mit 2 bis 16 Kohlenstoffatomen,
wobei das Verhältnis der Summe der OH-Gruppen der Verbindungen XV, XVI und XVII zu den NCO-Gruppen der Verbindung XVIII zu den Aminogruppen der Verbindung XIX 1 : 1,03 bis 1,3 : 0,03 bis 0,3 beträgt,
enthält, wobei die Summe der Gewichtsanteile der Polymerisate VI und VII an dem System V 40 bis 100 Gew.-% beträgt.

## Beschreibung

Die vorliegende Erfindung betrifft magnetische Aufzeichnungsträger, die ein nichtmagnetisches Trägermaterial und eine magnetisierbare Schicht enthalten, wobei die magnetisierbare Schicht ferromagnetische Pigmente und ein System aus polymeren Massen enthält.

Magnetische Aufzeichnungsträger, die ein nichtmagnetisches Trägermaterial und eine magnetisierbare Schicht enthalten, wobei die magnetisierbare Schicht ferromagnetische Pigmente und eine polymere Masse enthalten, sind allgemein bekannt, Beispielsweise aus Ullmann's Encyclopedia of Industrial Chemistry, 5. Ed., Vol. A14, S. 179-183, VCH Publishers Inc., Weinheim-New York, 1989.

An derartige magnetische Aufzeichnungsträger wurden bezüglich Qualität der Aufzeichnung sowie der Wiedergabe und die Alterungsbeständigkeit immer höhere Anforderungen gestellt. Um diesen Anforderungen gerecht zu werden, kommt den polymeren Massen, in welchem die ferromagnetischen Pigmente dispergiert sind, eine zunehmende Bedeutung zu. Angestrebt wird die Verbesserung der Stabilität der magnetischen Dispersionen, die Vermeidung des Entstehens von Fehlern auf der Magnetschicht sowie zur Verbesserung der magnetischen Eigenschaften, insbesondere der Remanenz, eine höhere Packungsdichte der ferromagnetischen Pigmente in der Schicht, was durch Verringerung des Anteils der polymeren Massen in der magnetischen Schicht erreichbar ist. Ebenso wird versucht, ein verbessertes Signal-Rausch-Verhältnis sowie eine sehr enge Schaltfeldverteilung durch die Verwendung immer feinteiliger ferromagnetischer Pigmente mit ausgeprägter und extrem gleichförmiger Nadelform zu erzielen. Die Pigmente werden zudem zur Erhöhung der Lagerstabilität sehr oft oberflächenmodifiziert.

Diese Maßnahmen erschweren sowohl die Aufteilung der Pigmente im Dispergierprozeß als auch das Erreichen einer guten Dispersionsstabilität. Zudem müssen die magnetische Schichten sehr flexibel sein, eine hohe Elastizität aufweisen und eine hohe Reißfestigkeit besitzen. Außerdem wird zur Vermeidung von Pegeleinbrüchen zunehmend eine Verringerung der Reibungswerte sowie eine Erhöhung der Abriebs- und Verschleißfestigkeit der magnetischen Schicht gefordert. Diese mechanischen Eigenschaften müssen auch bei hoher Temperatur, insbesondere bei Temperaturen von etwa 80°C sowie hoher Luftfeuchtigkeit, beispielsweise 100% relative Luftfeuchtigkeit bei etwa 40°C, gewährleistet sein.

Zur Erzielung dieser Eigenschaften wurde der Auswahl der polymeren Massen besondere Aufmerksamkeit gewidmet. Besonders bewährt haben sich Polyurethanelastomere, insbesondere Polyesterurethane, wie sie beispielsweise in DE-B 11 06 959, DE-A 27 53 694, EP-A 69 955 und US-A 2 899 411 beschrieben sind. Ferner sind Kombinationen von polymeren Massen bekannt, beispielsweise aus DE-A 41 41 839 und der älteren deutsche Anmeldung P 44 24 261.1 Kombinationen aus einem hochmolekularen Polyurethan oder einem OH-Gruppen- und Harnstoffgruppen-haltigen Polyurethan sowie einem eine Acrylat-oder Methacrylat-Gruppe- und Harnstoffgruppen-haltigen Polyurethan. Derartige Kombinationen weisen jedoch den Nachteil auf, daß sie bei erhöhten Beanspruchungen Nachteile in der Dispersionsstabilität nach sich ziehen. Bekannt sind ebenfalls Kombinationen aus drei polymeren Massen, beispielsweise aus EP-A 142 796 und EP-A 142 798 Kombinationen aus einem hochmolekularen linearen Polyurethan, einem OH-Gruppen- und Harnstoffgruppen-haltigen Polyurethan, sowie einer polymeren Masse ausgewählt aus der Gruppe Vinylcopolymere, Phenoxyharze und Cellulosederivate.

Die genannten polymeren Massen sowie Kombinationen aus polymeren Massen können jedoch die beschriebenen Anforderungen nicht ausreichend erfüllen. In vielen Fällen wird die Benetzung und Dispergierung der Pigmente, insbesondere bei sehr feinteiligen ferromagnetischen Pigmenten, ungünstig beeinflußt, so daß eventuelle Versinterungen beim Dispergierprozeß nicht genügend zerteilt werden oder Reagglomeration der Pigmentteilchen nicht ausreichend verhindert wird, was zu schlechten magnetischen Werten des Aufzeichnungsträgers führt. Aus diesem Grund wurden zur Erleichterung des Dispergiervorgangs niedermolekulare Dispergiermittel in kleineren Mengen der Dispersion zugefügt. Die Dispergiermittel wiesen jedoch bestimmte Nachteile auf. So können niedermolekulare Dispergiermittel bei ungünstigen Klimabedingungen, wie hoher Luftfeuchtigkeit und/oder Temperatur leicht ausschwitzen, wodurch es in Aufnahme- beziehungsweise Wiedergabegeräten zu Ablagerungen an allen bandführenden Teilen, insbesondere am Magnetkopf, kommt, wodurch Pegeleinbrüche verursacht werden. Außerdem wird die Reibung erhöht, wodurch der magnetische Aufzeichnungsträger beim Durchgang durch ein Gerät zum Blocken kommen kann.

Beim Einsatz dieser Dispergiermittel kann es andererseits zu Verträglichkeitsproblemen in der Dispersion kommen. Da die Dispergiermittel polare Gruppen enthalten, nimmt die Hydrophilie der Schicht stark zu, was bei Feuchtigkeit und hoher Temperatur Quellen der Schicht, Ausschwitzen der Dispergier- und Gleitmittel sowie andere mechanische Veränderungen zur Folge haben kann. Zur Verbesserung der dispergierenden Eigenschaften von Polyurethanen wurde bereits empfohlen, polare Gruppen in solche polymeren Massen einzubauen. Beispielsweise ist aus DE-A 28 33 845 der Einbau von Polyestern mit polaren Gruppen bekannt. Der Einbau von Diolen, die zusätzlich polare Gruppen tragen, wird beispielsweise in JP-A 57-092 421, DE-A 38 14 536 sowie EP-A 193 084 beschrieben. Derartige Dispergiermittel teilen die Pigmente zwar sehr gut auf führen aber insbesondere bei ferromagnetischen Pigmenten mit großer spezifischer Oberfläche (BET-Oberfläche) zu Dispersionen mit sehr ungünstigen rheologischen Eigenschaften wie erhöhter Fließgrenze und erhöhter Viskosität, so daß die Verarbeitung und das Vergießen dieser Dispersionen zu Magnetschichten mit großen Schwierigkeiten verbunden ist. Des weiteren ist der Gehalt an ionogenen dispergieraktiven Gruppen in dem Dispergiermittel auf eine maximale Konzentration beschränkt, da sonst negative Effekte, wie Überbrückungsflokkulation, auftreten. Eine Erhöhung der Pigmentvolumenkonzentration auf der einen Seite und eine Verringerung der Teilchengröße der Pigmente auf der anderen Seite ist mit dem notwendigen Gehalt an Dispergierharz nicht mehr vereinbar, sondern gegenläufig.

Eine wesentliche Verbesserung der mechanischen Eigenschaften magnetischer Aufzeichnungsträger konnte mit OH-Gruppen-haltigen Polyurethanen, wie sie beispielsweise in EP-A 99 533 beschrieben sind, erreicht werden. Jedoch reichen diese Maßnahmen nicht aus, um die immer weiter gestiegenen Anforderungen an die mechanischen und magnetischen Eigenschaften von Aufzeichnungsträgern zu befriedigen.

Eine deutliche Verbesserung der Dispergiereigenschaften wurde dadurch erzielt, daß der Matrix aus polymeren Massen ein eine Acrylat-oder Methacrylat-Gruppe- und Harnstoffgruppen-haltiges Polyurethan zugefügt wurde, wie beispielsweise in DE-A 41 41 839 beschrieben. Dabei ist von Nachteil, daß insbesondere bei mehrstufigen Herstellprozessen der magnetischen Dispersion bei Zuführung weiterer Komponenten ein sogenannter Auflackschock entsteht; außerdem neigen die fertigen Dispersionen bei längerer Lagerung zu Flokkulation oder Reagglomeration, was sich durch Fehler in der magnetischen Schicht bemerkbar macht. Deswegen werden für die Herstellung magnetischer Aufzeichnungsträger sehr häufig Abmischungen von polymeren Massen eingesetzt, beispielsweise, wie genannt, Kombinationen von elastische Polyurethanen mit Hartsegmenten, beispielsweise Polyvinylchlorid. Diese polymeren Massen sind jedoch nur bedingt mit Polyurethanen, die eine Acrylat-oder Methacrylat-Gruppe- und Harnstoffgruppen enthalten, verträglich.

Daher bestand die Aufgabe, magnetische Aufzeichnungsträger bereitzustellen, deren zur Herstellung benötigte Dispersionen auch über längere Zeit stabil sind und die eine niedrige Fließgrenze aufweisen, um daraus magnetische Aufzeichnungsträger herzustellen, die sich durch verbesserte Verschleißfestigkeit insbesondere bei Temperatur und Feuchteklimabelastung, erhöhte Remanenz, engere Schaltfeldverteilung, fehlerarme Schichtoberfläche und verbesserte magnetische Eigenschaften insbesondere bei der Speicherung digitaler Daten auszeichnen.

Demgemäß wurden magnetische Aufzeichnungsträger I, enthaltend ein nichtmagnetisches Trägermaterial II und eine magnetisierbare Schicht III, wobei die magnetisierbare Schicht III ferromagnetische Pigmente IV und ein System aus polymeren Massen V enthält, wobei das System aus polymeren Massen V
a) 3 bis 35 Gew.-% eines Polymerisats VI erhältlich durch Umsetzung von
   1) einem Polymerisat VII aus
      a) 80 bis knapp 100 mol-% eines C₁-C₂₅-Alkylesters einer a,b-ungesättigten Carbonsäure,
      b) 0 bis 20 mol-% eines oder mehrerer weiterer Monomerer und
      c) einem Starter und/oder Regler, durch welchen die Mehrzahl der Polymerketten des Polymerisats VII an einem ihrer Enden durch eine Hydroxylgruppe terminiert wird,
   2) mit einem mehrwertigen nicht-aromatischen Isocyanat VIII zu einem Umsetzungsprodukt IX, wobei die Menge der Isocyanatgruppen 1,2 bis 3,9 mol pro Mol der Hydroxylgruppen von VII beträgt,
   3) Umsetzung von IX mit
      a) einer gegenüber Isocyanaten reaktive Gruppen enthaltenden Verbindung X zu einem Umsetzungsprodukt XI, wobei die Menge der reaktiven Gruppen 2 bis 7 mol pro Mol der in IX noch vorhandenen freien Isocyanat-Gruppen beträgt
         und
         Umsetzung von XI mit einer Verbindung XII zum Polymerisat VI, die mit den noch freien reaktiven Gruppen in XI reagiert und durch welche ionische oder ionogene Gruppen in XI eingeführt werden,
         oder
      b) einer gegenüber Isocyanaten reaktive Gruppen enthaltenden Verbindung XIII, durch die ionische oder ionogene Gruppen in IX eingeführt werden, zum Polymerisat VI
      und
b) 5 bis 97 Gew.-% eines basische Gruppen enthaltenden Polymeren XIV mit einem Molekulargewicht von 30000 bis 2000000, erhältlich durch Umsetzung von
   1) einem polymeren Diol XV mit einem Molekulargewicht (Zahlenmittel) von 400 bis 10000, mit
   2) 0,3 bis 1 Mol pro Mol des Diols XV einer Mischung XVI aus
      a) mindestens einem Diol XVII mit 2 bis 18 Kohlenstoffatomen und
      b) einem Diol XVIII,
         b1) welches mindestens eine basische Gruppe enthält oder
         b2) in welches durch Umsetzung mit einer Verbindung XIX eine basische Gruppe eingeführt werden kann,
   3) 0,01 bis 1 Mol pro Mol des Diols XV eines mehrwertigen Alkohols XVII mit mindestens drei OH-Gruppen und 3 bis 25 Kohlenstoffatomen,
   4) 1,3 bis 13 Mol pro Mol des Diols XV eines Diisocyanats XVIII mit 6 bis 30 Kohlenstoffatomen und
   5) 0,09 bis 2 Mol pro Mol des Diols XV eines Aminoalkohols XIX mit 2 bis 16 Kohlenstoffatomen,
wobei das Verhältnis der Summe der OH-Gruppen der Verbindungen XV, XVI und XVII zu den NCO-Gruppen der Verbindung XVIII zu den Aminogruppen der Verbindung XIX 1 : 1,03 bis 1,3 : 0,03 bis 0,3 beträgt,
enthält, wobei die Summe der Gewichtsanteile der Polymerisate VI und VII an dem System V 40 bis 100 Gew.-% beträgt,
gefunden.

Als Monomere (a), aus welchem die Polymerisate VII größtenteils aufgebaut sind, kommen in erster Linie Ester von α,β-ungesättigten Carbonsäuren der Formel 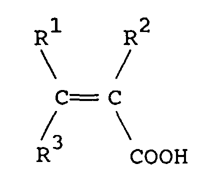 in Betracht, in der R¹, R² und R³ Wasserstoff oder C₁-C₄-Alkylreste darstellen, wobei Acrylsäure und Methacrylsäure bevorzugt sind. Es können auch Gemische von Estern verschiedener solcher Carbonsäuren eingesetzt werden.

Als Alkoholkomponente der Alkylester eignen sich neben den C₉-C₂₅-Alkanolen wie Nonanol, Stearylalkohol und Laurylalkohol bevorzugt die C₁-C₈-Alkanole, insbesondere Methanol und n-Butanol, sowie Gemische verschiedener solcher Alkanole.

Als weitere Comonomere (b) kommen für den Aufbau der Polymerisate VII bis zu 20, vorzugsweise 0 bis 5 mol-% solcher Monomerer in Betracht, durch welche die mechanischen, thermischen und chemischen Eigenschaften der Polymerisate, die nur aus dem Monomeren (a) aufgebaut sind, abgewandelt aber nicht wesentlich geändert werden. Derartige Monomere sind beispielsweise olefinisch ungesättigte aromatische Kohlenwasserstoffe wie Styrol und α-Methylstyrol, ungesättigte Nitrile wie Acrylnitril und Methacrylnitril, halogenierte Olefine wie Vinylchlorid, Vinylalkoholderivate wie Vinylacetat sowie insbesondere Monoester der genannten α,β-ungesättigten Carbonsäuren mit mehrwertigen Alkoholen wie Ethandiol, Propan-1,2-diol, Propan-1,3-diol, den Butandiolen, Glycerin sowie Gemischen dieser Alkohole.

Ferner kommen bifunktionelle Monomere in geringen Mengen in Betracht, durch welche eine leichte Vernetzung der Polymerisate ohne Beeinflussung von deren Eigenschaften als Thermoplasten bewirkt wird, z.B. Butadien, Divinylbenzol und die mehrfachen Ester von α,β-ungesättigten Carbonsäuren mit den vorgenannten mehrwertigen Alkoholen.

Erfindungsgemäß sollen die Polymerketten von VII mit einer Hydroxylgruppe terminiert werden. Man erreicht dies mit Initiatoren (Startern), welche beim Zerfall ein Hydroxyl-Radikal (OH-Radikal) liefern und/oder mit Reglern, die eine Hydroxylfunktion enthalten.

Initiatoren dieser Art sind z.B. tert.-Butylhydroperoxid, Tetrahydrofuranhydroperoxid, Cumolhydroperoxid oder 2,2'-Azobis (2-methyl-N-(2-hydroxyethyl)propionamid). Führt man die Hydroxylgruppe nur über einen Regler ein, können auch andere Initiatoren verwendet werden, z.B. Azo-bis-(iso-butyronitril), Di(tert.-butyl)peroxid, Didodecanoylperoxid, Dibenzoylperoxid, Peressigsäure-tert.-butylester oder 2-Methylperpropionsäure-tert.-butylester.

Geeignete Regler sind Aminoalkohole, Aminophenole sowie insbesondere Thioalkanole wie 3-Hydroxy-propanthiol, 2-Hydroxyethyl-3-mercaptopropionsäureester und vor allem 2-Hydroxy-ethanthiol (Mercaptoethanol).

Es können auch Gemische verschiedener Starter und/oder Regler eingesetzt werden.

Initiatoren und Regler werden in den üblichen Mengen eingesetzt, und zwar in der Regel von 0,1 bis 4,8 Gew.-% bzw. von 0,1 bis 5 Gew.-% bezogen auf das eingesetzte Gemisch aus den Monomeren (a) und (b). Da der Anteil der von den Initiatoren bzw. Reglern stammenden Endgruppen der Polymerketten nur etwa 0,05 bis 5 mol-% beträgt, wurden diese Mengen bei der Angabe der quantitativen Zusammensetzung des Polymeren VII aus Gründen der besseren Übersichtlichkeit außer Betracht gelassen.

Man kann die Polymeren VII nach allen bekannten Polymerisationsmethoden herstellen, also z.B. durch Substanzpolymerisation, Dispersionspolymerisation sowie vorzugsweise durch Lösungspolymerisation.

Als Lösungsmittel eignen sich Ester wie Essigsäureethylester, Kohlenwasserstoffe wie Toluol, sowie insbesondere cyclische Ether wie Tetrahydrofuran und Dioxan.

Die Polymerisation wird in der Regel bei erhöhter Temperatur, bevorzugt bei 40 bis 125°C durchgeführt, wodurch sich Reaktionszeiten von 2 bis 7 Stunden ergeben.

Die Polymerisate VII können aus dem Reaktionsgemisch nach bekannten Methoden, z.B. durch Extraktion oder Fällung, isoliert oder vorzugsweise ohne Isolierung zur Weiterverarbeitung eingesetzt werden.

Zur Herstellung der Umsetzungsprodukte IX wird ein Polymerisat VII mit einem mehrwertigen nicht-aromatischen Isocyanat VIII oder einem Gemisch solcher Isocyanate umgesetzt, wobei die Menge der Isocyanatgruppen 1,2 bis 3,9, vorzugsweise 2,0 bis 3,2, mol pro Mol der Hydroxylgruppen von VII beträgt. Die Menge der Hydroxylgruppen im fertigen Polymerisat VII entspricht in der Regel einer Hydroxylzahl von 5 bis 20 mg KOH/g VII (nach DIN 53240), was seinerseits 0,085 bis 0,34 mmol Hydroxylgruppen pro Gramm VII entspricht.

Als mehrwertige, nicht-aromatische Isocyanate können vorteilhaft offenkettige Isocyanate wie 1,6-Diisocyanatohexan, cyclische Isocyanate wie 1,3-Di(isocyanatomethyl)cyclohexan, oligomere, freie Isocyanatgruppen tragende Harnstoffderivate, z.B. Umsetzungsprodukte aus 3 mol 1,6-Diisocyanatohexan und 1 mol Wasser oder oligomere, freie Isocyanatgruppen tragende Urethane eingesetzt werden.

Die Herstellung von IX durch Umsetzung von VII mit VIII kann vorteilhaft in den zur Herstellung von VII geeigneten Lösungsmitteln durchgeführt werden.

Die Reaktion kann ohne Katalysator oder bevorzugt in Anwesenheit eines Katalysators wie einem tert. Amin, insbesondere Triethylamin, wie einem Metallsalz, insbesondere Zinnoctoat oder Bleioctoat oder wie einer metallorganischen Verbindung, insbesondere Dibutylzinndilaurat oder Titantetramethylat durchgeführt werden.

Die Reaktion wird in der Regel bei erhöhter Temperatur, bevorzugt 60 bis 125°C durchgeführt, entsprechend Reaktionszeiten von etwa 0,2 bis 5 Stunden.

Die Umsetzungsprodukte IX können aus dem Reaktionsgemisch nach bekannten Methoden, z.B. Extraktion oder Fällung, isoliert oder vorzugsweise ohne Isolierung zur Weiterverarbeitung eingesetzt werden.

Zur Herstellung der Umsetzungsprodukte XI wird das Umsetzungsprodukt IX mit einer gegenüber Isocyanaten reaktive Gruppen enthaltenden Verbindung X oder einem Gemisch solcher Verbindungen umgesetzt. Die Zahl der freien Isocyanatgruppen kann dabei nach DIN EN 1242 bestimmt werden.

Als gegenüber Isocyanaten reaktive Gruppen kommen viele Substanzklassen in Betracht, z.B. Mercaptane, Alkohole oder Amine. Es können Verbindungen X eingesetzt werden, die mehrere gleiche oder unterschiedliche Gruppen dieser Art enthalten.

Beispiele für derartige Verbindungen sind, wie allgemein bekannt, Mercaptane wie 1,2-Thioglycol, Thioalkohole wie 2-Mercaptoethanol, Thioamine wie (2-Mercaptoethyl)methylamin, Alkohole wie 1,2-Propandiol, Glycerin, 2,2-Di(hydroxymethyl)-1-butanol, Aminoalkohole wie Aminoethanol, N-Methylaminoethanol, 4-(3-Aminopropyl)benzylalkohol, N-(3-Hydroxylpropyl)piperidin, oder mehrwertige insbesondere nicht-aromatische Amine sowie Ammoniak und Wasser.

Als mehrwertige, nicht-aromatische Amine können vorteilhaft offenkettige Amine wie Ethylendiamin, Diethylentriamin, insbesondere Triethylentetraamin oder cyclische Amine wie Piperazine oder 4-Aminopiperidine insbesondere 2,2,5,5-Tetramethyl-4-aminopiperidin oder polycyclische Amine eingesetzt werden. Derartige Amine sind allgemein bekannt. Als besonders vorteilhaft haben sich Amine der Formel

H₂N(-CH₂-CH₂-NH)ₓ-H Xa

in der x einen Wert von 2 bis 6 hat, oder der Formel

H₂N-CH₂-CH₂-CH₂-NH(-CH₂-CH₂-NH)_{y}-CH₂-CH₂-CH₂-NH₂ Xb

in der y einen Wert von 0 bis 4 hat, erwiesen.

Die Verbindungen Xa sind in an sich bekannter Weise durch Oligomerisation von Ethylenimin in Anwesenheit von Ammoniak erhältlich, und die Verbindungen Xb können durch Umsetzung von 2 mol Acrylnitril mit 1 mol Ammoniak oder einer Verbindung Xa und anschließende Hydrierung der Nitrilfunktionen hergestellt werden.

Die Reaktion kann in Anwesenheit von Katalysatoren wie einem tert. Amin, insbesondere Tributylamin oder 1,4-Diazabicyclo-(2,2,2)octan, oder wie einer metallorganischen Verbindung, insbesondere Dibutylzinndilaurat, in Mengen von 1 bis 500, insbesondere 1 bis 50 Gew.-ppm bezogen auf IX, oder bevorzugt ohne Katalysator durchgeführt werden.

Die Herstellung von XI durch Umsetzung von IX mit X kann lösungsmittelfrei oder vorteilhaft in Gegenwart eines organischen Lösungsmittels wie einem Kohlenwasserstoff insbesondere Toluol oder Cyclohexan, wie einem Ester insbesondere Essigsäureethylester, wie einem Ether insbesondere Diisopropylether oder Methyl-tert.-butylether oder bevorzugt einem cyclischen Ether, insbesondere Tetrahydrofuran oder Dioxan durchgeführt werden.
In manchen Fällen kommt auch Wasser in Betracht.

Die Reaktion wird in der Regel bei 10 bis 70°C, bevorzugt 20 bis 40°C durchgeführt, wodurch sich Reaktionszeiten von etwa 0,1 bis 2 Stunden ergeben.

Die Umsetzungsprodukte XI können aus dem Reaktionsgemisch nach bekannten Methoden, z.B. durch Extraktion oder Fällung, isoliert oder vorzugsweise ohne Isolierung zur Weiterverarbeitung eingesetzt werden.

Zur Herstellung der Polymerisate VI wird das Umsetzungsprodukt XI mit einer Verbindung XII, die mit den noch freien reaktiven Gruppen in XI reagiert und durch welche saure Gruppen in XI eingeführt werden, oder Gemischen solcher Verbindungen umgesetzt. Die Zahl der freien reaktiven Gruppen kann im Falle der Aminogruppen dabei nach DIN 53176 und im Falle der Hydroxylgruppen nach DIN 53240 bestimmt werden.

Als mit den reaktiven Gruppen reagierende Stoffe XII können viele Substanzklassen eingesetzt werden, z.B. Alkylhalogenide, Amide, Epoxide, Ester, Ketone oder Isocyanate, die im Molekül eine oder mehrere saure Gruppen oder Gruppen, die leicht in saure Gruppen übergehen, tragen.
Saure Gruppen sind besonders Sulfonsäure-, Phosphonsäure-, Phosphorsäure sowie vor allem Carboxylgruppen oder Salze, beispielsweise Ammoniumsalze oder Alkalisalze, wie Natrium- oder Kaliumsalze, solcher saurer Gruppen.

Beispiele für derartige Verbindungen sind Alkylhalogenide wie Chloressigsäure, Amide wie Bernsteinsäuremonoamid, Epoxide wie Glycidsäure, Ester wie Phthalsäuremonomethylester oder Ketone wie Acetylessigsäure.

Besonders gut geeignete Verbindungen XII sind die inneren Anhydride von mehrwertigen Carbonsäuren wie Maleinsäureanhydrid, Bernsteinsäureanhydrid, Phthalsäureanhydrid und Adipinsäureanhydrid, welche beispielsweise mit Aminogruppen von XI Amidogruppen bilden, die mit einer Carbonylgruppe substituiert sind.

Im Falle von Hydroxylgruppen als reaktiven Gruppen können vorteilhaft neben den genannten Carbonsäuren und Carbonsäurederivaten auch anorganische Säuren, insbesondere Mineralsäuren wie Phosphorsäure sowie die Oligomeren und Polymeren solcher Säuren, oder Derivate wie Ester oder Salze solcher Säuren, durch die saure Gruppen in die Verbindung XI eingeführt werden, oder Gemische solcher Verbindungen als Verbindung X eingesetzt werden.

Man setzt diese Verbindungen in an sich bekannter Weise mit den reaktiven Gruppen der Polymeren XI um.

Die Herstellung von VI durch Umsetzung von XI mit XII kann lösungsmittelfrei oder vorteilhaft in Gegenwart eines organischen Lösungsmittels wie eines Kohlenwasserstoffs, insbesondere Toluol, Cyclohexan oder Hexan, wie eines Esters, insbesondere Essigsäureethylester, wie eines Ethers, insbesondere Diisopropylether oder Methyl-tert.-butylether, oder bevorzugt eines cyclischen Ethers, insbesondere Tetrahydrofuran oder Dioxan, durchgeführt werden. In manchen Fällen kommt auch Wasser in Betracht.

Die Reaktion wird in der Regel bei 10 bis 60°C, bevorzugt 20 bis 40°C durchgeführt, wodurch sich Reaktionszeiten von etwa 0,1 bis 1,5 Stunden ergeben.

Im Falle der Verwendung von anorganischen Säuren, insbesondere Mineralsäuren wie Phosphorsäure und Schwefelsäure sowie den Oligomeren und Polymeren solcher Säuren, oder von Derivaten wie Estern oder Salzen solcher Säuren, durch die saure Gruppen in die Verbindung XI eingeführt werden, oder Gemischen solcher Verbindungen als Verbindung X kann die Reaktion wie beschrieben oder vorteilhaft in an sich bekannter Weise in Gegenwart eines Lösungsmittels durchgeführt werden, das ein Azeotrop mit Wasser bildet. Als solche Lösungsmittel kommen beispielsweise Aromaten wie Benzol oder Toluol, in Betracht. Es können auch Gemische solcher Lösungsmittel eingesetzt werden.
Die Reaktion wird in der Regel bei dem sich unter dem entsprechenden Druck einstellenden Siedepunkt durchgeführt, so daß sich Reaktionszeiten von etwa 1 bis 10 Stunden ergeben.

Das Polymerisat VI kann aus der Reaktionsmischung nach bekannten Methoden, z.B. Extraktion oder Fällung, isoliert werden. Vorzugsweise verwendet man die Reaktionsmischung aber unmittelbar für die Herstellung der magnetischen Aufzeichnungsträger.

Zur Herstellung des Polymerisats VI kann die Verbindung IX erfindungsgemäß mit einer Verbindung XIII umgesetzt werden, die mindestens eine gegenüber Isocyanaten reaktive Gruppe aufweist und die im Molekül eine oder mehrere ionische oder ionogene Gruppen trägt. Es können auch Gemische verschiedener Verbindungen XIII eingesetzt werden.

Als Verbindung mit Gruppen, die gegenüber Isocyanaten reaktiv sind, kommen viele Substanzklassen in Betracht, z.B. Mercaptane, Alkohole oder Amine sowie Ammoniak. Es können auch Verbindungen XIII eingesetzt werden, die mehrere gleiche oder unterschiedliche Gruppen dieser Art enthalten.

Saure Gruppen sind besonders die Sulfonsäure-, Phosphonsäure-, Phosphorsäure- sowie vor allem Carboxylgruppe.
Gruppen, die leicht in saure Gruppen übergehen, sind beispielsweise die Estergruppe oder Salze, vorzugsweise der Alkalimetalle wie Natrium oder Kalium.

Beispiele für derartige Verbindungen XIII sind Hydroxycarbonsäuren wie Zitronensäure, Hydroxymethylbernsteinsäure, 6-Hydroxycapronsäure oder 12-Hydroxydodecansäure, Aminocarbonsäuren wie Aminovaleriansäure, Mercaptocarbonsäuren wie Mercaptobernsteinsäure, Phosphorsäurederivate, vorzugsweise Hydroxyalkyl-Phosphorsäureester wie Phosphorsäure-mono-(bis-(2,3-hydroxymethyl))-butyl-ester oder Oligoethylenglykol-Phosphorsäureester, Aminoalkyl-Phosphorsäureester wie Phosphorsäure-mono-(2-aminoethyl)-ester-Natriumsalz, Phosphonsäurederivate, vorzugsweise Hydroxyalkyl-Phosphonsäureester wie Bis-(N-2-hydroxyethyl)-aminoethyl-phosphonsäure-diethylester, Aminoalkyl-Phosphonsäureester wie 3-Aminopropyl-Phosphonsäurediethylester oder Sulfonsäurederivate, vorzugsweise Hydroxysulfonsäuren wie 3-Hydroxypropansulfonsäure oder Aminosulfonsäuren wie N-Methyltaurin.

Basische Gruppen sind besonders Aminogruppen.

Beispiele für solche Verbindungen XIII sind Ammoniak oder mehrwertige, nichtaromatische Amine, vorteilhaft offenkettige Amine wie Ethylendiamin, Diethylentriamin, insbesondere Triethylentetraamin oder cyclische Amine wie Piperazine oder 4-Aminopiperidine insbesondere 2,2,5,5-Tetramethyl-4-aminopiperidin oder polycyclische Amine.
Derartige Amine sind allgemein bekannt.
Als besonders vorteilhaft haben sich Amine der Formel

H₂N(-CH₂-CH₂-NH)ₓ-H Xa

in der x einen Wert von 2 bis 6 hat, oder der Formel

H₂N-CH₂-CH₂-CH₂-NH(-CH₂-CH₂-NH)_{y}-CH₂-CH₂-CH₂-NH₂ Xb

in der y einen Wert von 0 bis 4 hat, erwiesen.

Die Verbindungen Xa sind in an sich bekannter Weise durch Oligomerisation von Ethylenimin in Anwesenheit von Ammoniak erhältlich, und die Verbindungen Xb können durch Umsetzung von 2 mol Acrylnitril mit 1 mol Ammoniak oder einer Verbindung Xa und anschließende Hydrierung der Nitrilfünktionen hergestellt werden.

Die Reaktion kann in Anwesenheit von Katalysatoren, beispielsweise einem tert. Amin wie Tributylamin oder 1,4-Diazabicyclo-(2,2,2)octan oder beispielsweise einer metallorganischen Verbindung wie Dibutylzinndilaurat, in Mengen von 1 bis 500, insbesondere 1 bis 50 Gew.-ppm bezogen auf IX, oder bevorzugt ohne Katalysator durchgeführt werden.

Die Herstellung von VI durch Umsetzung von IX mit XIII kann lösungsmittelfrei oder vorteilhaft in Gegenwart eines organischen Lösungsmittels vorgenommen werden. Als Lösungsmittel eignen sich Kohlenwasserstoffe, insbesondere Toluol und Cyclohexan, Ester, insbesondere Ethylacetat, Ether, insbesondere Diisopropylether und Methyl-tert.-butylether, sowie bevorzugt cyclische Ether, insbesondere Tetrahydrofuran oder Dioxan. In manchen Fällen kommt auch Wasser in Betracht.

Die Reaktion wird in der Regel bei 10 bis 70°C, bevorzugt 20 bis 60°C durchgeführt, wodurch sich Reaktionszeiten von etwa 0,1 bis 2 Stunden ergeben.

Als Diol XV kommt vorzugsweise ein Polyesterol, Polyetherol oder Polycarbonat mit einem Molekulargewicht von 400 bis 10000, insbesondere 500 bis 2500 sowie Mischungen solcher Verbindungen in Betracht. Die Diole sind zweckmäßigerweise überwiegend lineare Polymere mit zwei endständigen OH-Gruppen. Die Polyesterole lassen sich in einfacher Weise durch Veresterung von aliphatischen oder aromatischen Dicarbonsäuren mit 4 bis 15 C-Atomen, vorzugsweise 4 bis 8 C-Atomen, mit aliphatischen oder cycloaliphatischen Diolen, bevorzugt mit 2 bis 20 C-Atomen oder durch Polymerisation von Lacton mit 3 bis 10 C-Atomen herstellen. Als Dicarbonsäuren lassen sich beispielsweise Glutarsäure, Pimelinsäure, Korksäure, Sebacinsäure, Dodecansäure, Isophthalsäure, Phthalsäure, vorzugsweise Adipinsäure, Bernsteinsäure und Terephthalsäure einsetzen. Die Dicarbonsauren können einzeln oder im Gemisch verwendet werden. Zur Herstellung der Polyesterole kann es gegebenenfalls vorteilhaft sein, anstelle der Dicarbonsäuren die entsprechenden Säurederivate wie Carbonsäureanhydride oder Carbonsäurechloride zu verwenden. Beispiele für geeignete Diole sind Diethylenglycol, Pentandiol, 1,10-Decandiol und 2,2,4-Trimethylpentan-1,5-diol, insbesondere 1,2-Ethandiol, 1,4-Butandiol, 1,6-Hexandiol, 2,2-Dimethylpropan-1,3-diol, 1,4-Dimethylolcyclohexan, 1,4-Diethanolcyclohexan und 1,4-Diethanolpropan. Als Lacton für die Herstellung der Polyesterole eignen sich beispielsweise 2,2-Dimethylpropio-3-lacton, Butyrolacton und vorzugsweise Caprolacton. Bevorzugte Polycarbonate sind im allgemeinen auf 1,6-Hexandiol-Basis aufgebaut.
Geeignete Polyetherole sind im wesentlichen lineare, endständige Hydroxylgruppen aufweisende Substanzen, die Etherbindungen enthalten und ein Molekulargewicht von vorzugsweise 600 bis 4000, insbesondere 1000 bis 2000 aufweisen. Besonders geeignete Polyetherole können leicht durch Polymerisation von cyclischen Ethern, wie Tetrahydrofuran, oder durch Umsetzung von einem oder mehreren Alkylenoxiden mit 2 bis 24 C-Atomen im Alkylenrest mit einem Startermolekül, das zwei aktive Wasserstoffatome im Alkylenrest gebunden enthält, hergestellt werden. Als Alkylenoxid seien beispielsweise Ethylenoxid, 1,2-Propylenoxid, Epichlorhydrin, 1,2-Butylenoxid und 2,3-Butylenoxid genannt. Die Alkylenoxide können einzeln, alternierend nacheinander oder als Mischung verwendet werden. Als Startermolekül kommen beispielsweise Wasser, Glycole wie Ethylenglycol, Propylenglycol, 1,4-Butandiol und 1,6-Hexandiol, Amine wie Ethylendiamin, Hexamethylendiamin und 4,4'-Diamino-di-phenylmethan und Aminoalkohole wie Ethanolamin in Betracht. Ebenso wie Polyesterole können auch die Polyetherole allein oder in Mischung eingesetzt werden.

Als Diol XVI können aliphatische Diole mit 2 bis 10 C-Atomen, vorzugsweise 4 bis 6 C-Atomen eingesetzt werden, beispielsweise 1,2-Ethandiol, 1,3-Propandiol, 1,4-Butandiol, 1,6-Hexandiol, 1,5-Pentandiol, 1,10-Decandiol, 2-Methyl-2-butyl-1,3-Propandiol, 2,2-Dimethyl-1,4-butandiol, Hydroxypivalinsäureneopentylglycolester, Diethylenglycol, Triethylenglycol, 1,4-Dimethylolcyclohexan, 1,4-Diethanolcyclohexan oder aromatische Diole wie Ethylen- oder Propylenaddukte des Bisphenols A oder Ethylenoxid-Addukte des Hydrochinons.
Die Diole können einzeln oder als Gemisch verwendet werden. Im untergeordneten Maß können auch Diamine mit 2 bis 15 C-Atomen wie Ethylendiamin, 1,6-Hexamethylendiamin, 4,9-Dioxododecan-1,12-diamin, 4,4'-Diaminodiphenylmethan oder Aminoalkohole wie Monoethanolamin, Monoisopropanolamin und 2-Amino-2-methylpentan-2-ol eingesetzt werden. Hierbei hat es sich als vorteilhaft erwiesen, die dabei entstehenden Harnstoffgruppen in die Polymerkette einzubauen. Die Harnstoffgruppen am Kettenende sind hierbei von untergeordneter Bedeutung.

In gleicher Weise können als Verbindung XVI die genannten Diole auch ganz oder teilweise durch Wasser ersetzt werden.

Als mehrwertige Alkohole XVII kommen in erster Linie Triole mit 3 bis 10, vorzugsweise 3 bis 6 C-Atomen in Betracht, wie Glycerin oder Trimethylolpropan. Geeignet sind ebenfalls niedermolekulare Umsetzungspropdukte eines mehrwertigen Alkohols wie Trimethylolpropan mit einem Alkylenoxid wie Ethylenoxid oder Propylenoxid. Als höherwertige Alkohole lassen sich beispielsweise Erythrit, Pentaerythrit und Sorbit einsetzen.

Als Diisocyanate XVIII kommen in erster Linie aliphatische, cycloaliphatische oder aromatische Diisocyanate mit 6 bis 30 C-Atomen in Betracht. Geeignet sind insbesondere Toluylen-2,4-diisocyanat, Toluylen-2,6-diisocyanat, m-Phenylendiisocyanat, 4-Chlor-1,3-phenylendiisocyanat, 1,5-Naphthylendiisocyanat, 1,5-Hexamethylendiisocyanat, 1,6-Hexamethylendiisocyanat, 1,4-Cyclohexylendiisocyanat, 1,5-Tetrahydronaphthylendiisocyanat, 4,4'-Diphenylmethandiisocyanat, Dicyclohexylmethandiisocyanat, Isophorondiisocyanat der Formel 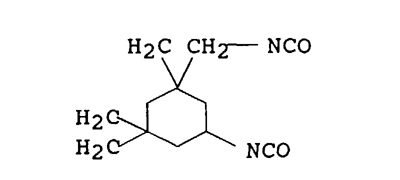 sowie Gemische solcher Verbindungen.

Als Verbindung XIX kommen in erster Linie Aminoalkohole mit 2 bis 16, vorzugsweise 3 bis 6 C-Atomen wie Dimethylethanolamin, vorzugsweise Diolamine, wie Ethyldiisopropanolamin und N-bis(2-Hydroxyethyl)anilin, insbesondere Methyldiethanolamin und Methyldiisopropanolamin in Betracht.

Ferner können in Mengen von bis zu 1 Mol pro Mol der Verbindung XIX bezogen auf die gegenüber Isocyanaten reaktiven Aminogruppen OH-Gruppen-freie Monoamine mit 2 bis 16 C-Atomen, wie Alkylmonoamine, Dialkylmonoamine oder Diphenylamine, insbesondere Dibutylamin eingesetzt werden.

Das Verhältnis der Komponenten XV bis XVIII sollte 1,3 bis 13 Mol Diisocyanat XVIII pro Mol Diol XV bei Verwendung von 0,3 bis 10 Mol des Diols XVI und 0,05 bis 0,5 Mol mehrwertigen Alkohols XVII betragen. Aus praktischen Gründen kann es zweckmäßig sein, einen Diisocyanatüberschuß von mindestens 3 % über der zur vollständigen Umsetzung der Reaktionsteilnehmer erforderlichen Menge zu verwenden, so daß das Verhältnis der Zahl der eingesetzten Isocyanatgruppen zur Zahl der Hydroxylgruppen in der Reaktionsmischung 1,03 bis 1,3, vorzugsweise 1,05 bis 1,15 beträgt. Der NCO-Überschuß kann dann stöchiometrisch mit den Aminogruppen der Verbindung XIX umgesetzt werden, so daß das molare Verhältnis der Komponenten XV,XVI und XVII : XVIII . XIX wie 1 : 1,03 bis 1,3 : 0,03 bis 0,3, bevorzugt 1 : 1,05 bis 1,15 . 0,05 bis 0,15 beträgt.

Die polymeren Massen können lösungsmittelfrei, vorzugsweise in Gegenwart eines flüssigen Verdünnungsmittels, gegebenenfalls in Gegenwart eines Katalysators oder weiterer Hilfsstoffe hergestellt werden.

Als flüssige Verdünnungsmittel kommen Aromaten wie Toluol und Xylol, Ester wie Ethylacetat und Butylacetat, Ketone wie Cyclohexanon und Methylethylketon, Amide wie Dimethylformamid und N-Methylpyrrolidon, Sulfoxide wie Dimethylsulfoxid oder vorzugsweise insbesondere cyclische Ether wie Tetrahydrofuran und Dioxan sowie Mischungen solcher Verdünnungsmittel in Betracht.

Als geeignete Katalysatoren seien beispielhaft Amine wie Triethylamin, Triethylendiamin, N-Methyl-pyridin und N-Methyl-morpholin, Metallsalze wie Zinnoctoat, Bleioctoat und Zinkstearat und organische Metallverbindungen wie Dibutylzinndilaurat genannt. Die optimale Katalysatormenge ist abhängig von der Wirksamkeit des eingesetzten Katalysators. Im allgemeinen hat es sich zweckmäßig erwiesen, 0,005 bis 0,3 Gewichtsteile für je 100 Gewichtsteile, vorzugsweise 0,01 bis 0,1 Gewichtsteile für jeweils 100 Gewichtsteile der Summe der Verbindungen XV bis XIX zu verwenden.

Zur Herstellung der polymeren Massen XIV kommen in erster Linie zwei Verfahren in Betracht.
Zu einer Mischung aus einem flüssigen Verdünnungsmittel und einer Verbindung XVIII kann man eine Mischung aus einem Verdünnungsmittel, den Verbindungen XV, XVI und XVII und gegebenenfalls einem Katalysator oder weiteren Hilfsmitteln bei Temperaturen von 20 bis 90°C, vorzugsweise 30 bis 70°C in 0,2 bis 5 Stunden zugeben.

Ferner besteht die Möglichkeit, die Verbindungen XV bis XVIII mit einem Verdünnungsmittel zu mischen, wobei der Anteil der Verbindungen XV bis XVIII vorteilhaft 15 bis 50 Gew.-% bezogen auf die gesamte Mischung betragen sollte. Anschließend kann man die Mischung, gegebenenfalls unter Zugabe eines Katalysators oder weiterer Hilfsstoffe unter Rühren auf Temperaturen zwischen 20 und 99°C, vorzugsweise 30 und 70°C, erwärmen und danach eine Verbindung XIX zugeben.

Die polymeren Massen XIV können aus der Mischung nach bekannten Methoden, wie Extraktion oder Fällung, isoliert werden. Vorzugsweise verwendet man die Mischung aber unmittelbar für die Herstellung der magnetischen Aufzeichnungsträger.

Das System V enthält erfindungsgemäß 3 bis 35 Gew.-% eines Polymerisats VI und 5 bis 97 Gew.-% eines Polymerisats XIV, wobei die Summe der Gewichtsanteile der Polymerisate VI und XIV an dem System V 40 bis 100 Gew.-% beträgt. Das System V kann bis zu 60 Gew.-% mindestens einer weiteren polymeren Masse XCX, vorzugsweise einer solchen ohne ionische Gruppen, enthalten. Besonders vorteilhaft sind dabei Systeme V bestehend aus 5 bis 25 Gew.-% mindestens einer Masse VI, 15-60 Gew.-% mindestens einer Masse XIV und 15-60 Gew.-% mindestens einer Masse XCX.

Massen XCX, insbesondere physikalisch trocknende Bindemittel, sind an sich bekannt. Geeignet sind Polyvinylformalbindemittel, welche durch Hydrolyse eines Polymerisats eines Vinylesters und anschließende Umsetzung des Polyvinylalkohols mit Formaldehyd hergestellt werden können. Die Polyvinylformale sollten zweckmäßigerweise einen Vinylformalgruppengehalt von mindestens 65 Gew.-%, vorzugsweise mindestens 80 Gew.-% aufweisen. Besonders geeignet sind Polyvinylformale mit einem Gehalt an Vinylalkoholgruppen von 5 bis 13 Gew.-%, einem Gehalt an Vinylformalgruppen von 87 bis 95 Gew.-%, ein spezifisches Gewicht von 1,2 und eine Viskosität von 50 bis 120 mPas gemessen bei 20°C in einer Lösung von 5 g Polyvinylformal in 100 ml Phenol/Toluol (1:1 Gewichtsanteile).

In gleicher Weise geeignet sind neben Polyvinylformal Copolymerisate aus Vinylchlorid und Mono- oder Diestern von Diolen und α,β-ungesättigten Carbonsäuren der Formel 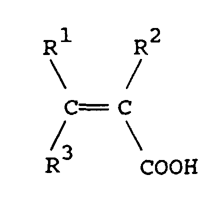 in der R¹, R² und R³ Wasserstoff oder C₁-C₄-Alkylreste darstellen, wobei Acrylsäure und Methacrylsäure bevorzugt sind. Als Diole kommen in erster Linie aliphatische Diole, insbesondere mit 2 bis 4-C-Atomen, wie Ethandiol, 1,4-Butandiol, 1,2-Propandiol, 1,3-Propandiol oder Mischungen solcher Diole, vorzugsweise ein System aus 0,1 bis 50 Gew.-% 1,2-Propandiol und 50 bis 99,9 Gew.-% 1,3-Propandiol bezogen auf das Diol-Gesamtgewicht, in Betracht.
Ebenso geeignet sind Copolymerisate aus Vinylchlorid und Estern olefinisch ungesättigter Alkohole wie Vinylalkohol mit gesättigten Carbonsäuren, vorzugsweise Carbonsäuren mit 1 bis 4 C-Atomen, wobei Essigsäure bevorzugt ist.
Solche Copolymerisate können beispielsweise durch Lösungs- oder Suspensionscopolymerisation hergestellt werden.
Die Copolymerisate sollten vorteilhaft einen Vinylchlorid-Gehalt von 50 bis 95 Gew.-%, vorzugsweise 70 bis 90 Gew.-%, und einen Gehalt an den Mono- oder Diestern von Diolen und α,β-ungesättigten Carbonsäuren von 5 bis 50 Gew.-%, vorzugsweise 10 bis 30 Gew.-%, bezogen auf die Masse XCX haben. Besonders geeignet sind derartige Copolymerisate, die in 15 gew.-%iger Lösung in gleichen Volumenanteilen von Tetrahydrofuran und Dioxan bei 25°C eine Viscosität von 20 bis 80 mPas oder einen K-Wert nach H. Fikentscher (Cellulose-Chemie 13 (1943) 58) von zwischen 30 und 50 aufweisen.

Ferner können vorteilhaft Phenoxyharze, insbesondere solche, deren Konstitution mit der wiederkehrenden Formel 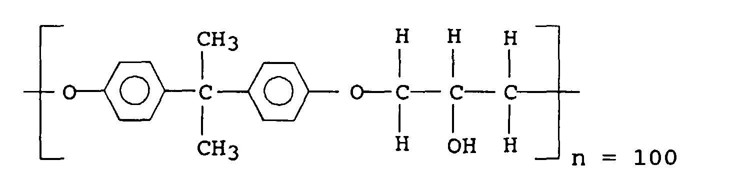 in der n vorzugsweise annähernd gleich 100 ist, zu beschreiben ist, eingesetzt werden. Solche Verbindungen sind beispielsweise unter den Handelsbezeichnungen Epikote^{R} (Firma Shell Chemical Co.) oder Epoxidharz PKHHR (Union Carbide Corporation) bekannt.

In gleicher Weise eignen sich cellulosehaltige Bindemittel wie Celluloseester, insbesondere Veresterungsprodukte der Cellulose mit Salpetersäure oder mit Carbonsäuren mit 1 bis 4 C-Atomen, wie Celluloseacetate, beispielsweise Celluloseacetat oder Cellulosetriactetat, Celluloseacetopropionat und Celluloseacetobutyrat.

Die vorteilhaften Eigenschaften der erfindungsgemäßen magnetischen Aufzeichnungsträger werden im Vergleich zu den unter Verwendung der üblichen thermoplastischen Polyurethanelastomeren erhaltenen auch deutlich, wenn vor dem Auftragen der Dispersion auf den Träger ein mehrwertiges Isocyanat zugesetzt wird. Besonders günstig ist hierbei die Verwendung des erfindungsgemäßen Systems V in Kombination mit Polyurethanelastomeren, die in ihrer bevorzugten Form auch OH-Gruppen tragen, und die OH-gruppenhaltige Polyvinylformale oder die genannten Polyvinylchloridcopolymerisate enthalten. Für die Vernetzung kann eine Vielzahl organischer mehrwertiger Isocyanate, vorzugsweise mit einem Molekulargewicht von bis zu 10000, insbesondere 500 bis 3000, verwendet werden. Bevorzugt sind mehrwertige Isocyanate oder isocyanatgruppenhaltige Polymere, die mehr als 2 NCO-Gruppen pro Molekül tragen. Besonders geeignet sind mehrwertige Isocyanate, die durch Umsetzung von Toluylendiisocyanat, Hexamethylendiisocyanat oder Isophorondiisocyanat der Formel 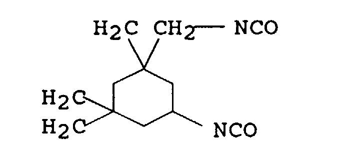 mit Di- oder Triolen oder durch Biuret- oder Isocyanuratbildung erhältlich sind. In erster Linie kommt dazu ein Additionsprodukt von Toluylendiisocyanat an Trimethylolpropan und Diethylenglykol in Betracht. Das molare Verhältnis der NCO-Gruppen der zugesetzten Isocyanatkomponente bezogen auf die OH-Gruppen der Polyurethanelastomeren kann dabei 0,5:1 bis 3:1, vorzugsweise 0,7:1 bis 1,8:1 betragen, wobei sich die für die jeweiligen Anwendungszwecke optimalen Verhältnisse durch einige einfache Vorversuche leicht ermitteln lassen.

Zur Herstellung der magnetischen Aufzeichnungsträger können die ferromagnetischen Pigmente mit einem System V und gegebenenfalls Zusatzstoffen wie einem Gleitmittel oder Füllstoffen lösungsmittelfrei oder vorzugsweise in Gegenwart eines organischen Verdünnungsmittels in an sich bekannter Weise dispergiert werden, wobei die Reihenfolge und Menge der Zugabe der Komponenten je nach Anwendungszweck und ferromagnetischem Pigment durch einige einfache Vorversuche leicht angepaßt werden kann, und auf eine oder beide Seiten einer unmagnetische Trägerschicht mittels einer üblichen Beschichtungsmaschine, wie eines Linealgießer oder eines Extruders, aufgetragen werden. Nach der Orientierung der ferromagnetischen Pigmente in einem starken Magnetfeld kann die weitere Verarbeitung wie üblich erfolgen, z.B. durch Entfernen des Lösungsmittels und, falls das System V vernetzbar ist, Aushärten des Systems mit abschließendem Kalandrieren unter Druck und bei Temperaturen von im allgemeinen 25 bis 100°C, vorzugsweise 60 bis 90°C. Bei vernetzenden polymeren Massen hat es sich dabei als vorteilhaft erwiesen, die Kalandrierung vorzunehmen, bevor die Vernetzung abgeschlossen ist, da die OH-Gruppen haltigen Polymeren in unvernetztem Zustand üblicherweise thermoplastisch sind, ohne hierbei zu verkleben. Die Dicke der Magnetschicht beträgt im allgemeinen 0,5 bis 20 mm, vorzugsweise 1 bis 20 mm. Im Falle der Herstellung von Magnetbändern werden die beschichteten Trägermaterialien in Längsrichtung und in den üblichen, meist nach Zoll bemessenen Breiten, geschnitten.

Als magnetische Pigmente kommen die üblichen oxidischen Pigmente wie γ-Fe₂O₃, γ-Fe₃O₄, Bariumferrite und CrO₂ oder metallischen Pigmente wie Fe, Co und Ni in Betracht. Diese Pigmente können, wie allgemein bekannt ist, weitere chemische Elemente oder Verbindungen enthalten.

Als Gleitmittel finden üblicherweise Carbonsäuren mit 10 bis 20 Kohlenstoffatomen, insbesondere Stearinsäure oder Palmitinsäure, oder Derivate von Carbonsäuren, wie deren Salze, Ester und Amide Anwendung.

Als Zusatzstoffe finden bekanntermaßen Füllstoffe wie anorganische und organische Pigmente, z.B. Aluminiumoxid, Siliziumdioxid, Titandioxid, Ruß, Polyethylen, Polypropylen oder thixotrope Substanzen, z.B. amorphe Kieselsäure, Anwendung.

Die Mischungen aus ferromagnetischem Pigment, System V und gegebenenfalls Zusatzstoffen oder Lösungsmitteln dienen in üblicher Weise als Beschichtungsmittel. Das Mengenverhältnis von den ferromagnetischen Pigmenten zu dem System V sollte vorzugsweise zwischen 1 bis 15, insbesondere 3 bis 10 Teile Pigment pro Gewichtsteil System V betragen. Es ist ein besonderer Vorteil, daß aufgrund des vorzüglichen Pigmentbindevermögens der Systeme V hohe Magnetpigmentkonzentrationen in den magnetischen Schichten ermöglicht werden, ohne daß die mechanisch-elastischen Eigenschaften verschlechtert oder die Anwendungseigenschaften merklich in Mitleidenschaft gezogen werden.
Die Beschichtungsmittel können dabei die erfindungsgemäßen Mischungen allein oder im Gemisch mit anderen Pigmenten oder polymeren Massen enthalten.

Als Verdünnungsmittel eignen sich Kohlenwasserstoffe, insbesondere Toluol und Cyclohexan, Ketone, insbesondere Methylethylketon und Cyclohexanon, Ester, insbesondere Essigsäureethylester, sowie Ether, insbesondere Tetrahydrofuran oder Dioxan. In manchen Fällen kommt auch Wasser in Betracht.

Als nichtmagnetische und nichtmagnetisierbare Träger lassen sich die üblichen starten oder flexiblen Trägermaterialien verwenden, insbesondere Folien aus linearen Polyestern wie Polyethylenterephthalat, die im allgemeinen Stärken von 0,5 bis 200 mm und insbesondere von 1 bis 36 mm haben.

Die erfindungsgemäßen magnetischen Aufzeichnungsträger können unmagnetische Schichten, wie Zwischenschichten, Rückschichten und Deckschichten in an sich bekannter Weise enthalten.

Bei der Herstellung magnetischer Aufzeichnungsmaterialien können mehrere Magnetschichten, von denen mindestens eine Schicht ein erfindungsgemäßes System V enthält, auf das Trägermaterial aufgebracht werden.

Die erfindungsgemäßen magnetischen Aufzeichnungsträger zeichnen sich gegenüber solchen nach dem Stand der Technik durch verbesserte Feinrauhigkeit der Magnetschichtoberfläche, eine gesteigerte Verschleißfestigkeit insbesondere bei Temperatur- und Feuchtigkeitsklimabelastung sowie durch erhöhte magnetische Kenndaten aus. Als Folge dieser verbesserten feinrauhen Oberfläche und erhöhter Magnetwerte steigt im Videobereich der HF-Pegel und der Chromapegel, aber auch der HiFi-Pegel deutlich an. Eine weitere Konsequenz dieser verbesserten Eigenschaften ist ein größerer Störabstand, bedingt durch ein verringertes Rauschen, speziell des Modulationsrauschens, was die Notwendigkeit zur Verwendung noch feinteiliger Magnetpigmente verringert. Die größeren Pigmentnadeln lassen sich aber bei gleichem Richtaufwand besser richten und ergeben somit höhere Remanenz- und Pegelwerte als feinteilige Magnetpigmente. Gegenüber dem Stand der Technik kann somit der technische Aufwand zur Dispergierung, Beschichtung und Ausrichtung der Magnetschicht verringert werden unter gleichzeitiger Erzielung einer hohen Aufzeichnungsdichte.

Durch die Verringerung des Dispergieraufwands, der Dispergierzeit, aber auch den hohen Feststoffgehalt der Dispersion sowie gesteigerten Langzeitstabilität der Dispersion lassen sich die erfindungsgemäßen magnetischen Aufzeichnungsträger in einfacher und wirtschaftlicher Weise herstellen.

Die in den nachstehenden Beispielen und Vergleichsbeispielen genannten Teile und Prozente beziehen sich, soweit nicht anders angegeben, auf das Gewicht.

### Beispiel 1

In einer Rührwerkskugelmühle mit einem Inhalt von 1,5 l, gefüllt mit 2,7 kg keramischer Kugeln mit einem Durchmesser zwischen 1 und 1,5 mm, wurden 1380 g eines Gemisches Tetrahydrofuran (THF)/Dioxan (1:1), 4930 g Dioxan, 273 g einer 25%igen Lösung eines aminogruppenhaltigen Polymeren VI gemäß DE-A 44 33 931 (Beispiel 1), 1002 g einer 15%igen Lösung eines kationischen Polymeren XIV gemäß DE-A 42 41 506, (Beispiel 1, Polymer B in THF/Dioxan 1:1), 290 g einer 20%igen Lösung in THF/Dioxan (1:1) eines Polyvinylchlorid/Polyvinylacetat-Copolymerisats gemäß DE-A 44 45 173, 904 g einer 5%igen Nitrocelluloselösung in THF/Dioxan (1:1) mit einem K-Wert von ca. 110, 1220 g eines cobaltdotierten Eisenoxids (Hc = 58 kA/m, BET-Oberfläche 26 m²/g), 116 g eines Aluminiumoxids (BET-Oberfläche 10 m²/g), 113 g eines leitfähigen Rußes (BET-Oberfläche 200 m²/g) und 58 g Fettsäureester eingefüllt und 14 Stunden dispergiert. Die Dispersion wurde unter Druck filtriert und unmittelbar vor dem Auftragen mit einer Trockendicke von 0,8 mm auf eine 75 mm dicke Polyethylenterephthalatfolie unter Rühren mit, bezogen auf 100 Teile Dispersion, 20 Teilen einer 50%igen Lösung eines Triisocyanats aus 3 Mol Toluylendiisocyanat und 1 Mol Trimethylolpropan in THF/Dioxan (1:1) versehen. Die beidseitig beschichtete Folie wurde bei Temperaturen zwischen 50 und 80°C getrocknet und durch Hindurchführen zwischen beheizten Walzen unter Druck (Liniendruck 200 kg/cm) geglättet.

Die Meßergebnisse sind in Tabelle 1 zusammengefaßt.

### Vergleichsbeispiel 1

In einer Rührwerkskugelmühle mit einem Inhalt von 1,5 l, gefüllt mit 2,7 kg keramischer Kugeln mit einem Durchmesser zwischen 1 und 1,5 mm, wurden 1380 g eines Gemisches THF/Dioxan (1:1), 4930 g Dioxan, 273 g einer 25%igen Lösung eines Polymeren VI gemäß der deutschen Anmeldung P44 00 595.4 (Polymer A) in THF/Dioxan (1:1), 1002 g einer 15%igen Lösung eines phosphonatgruppenhaltigen Polymeren XIV gemäß DE-A 42 41 506 (Beispiel 2) in THF/Dioxan (1:1), 290 g einer 20%igen Lösung eines Polyvinylchlorid/Polyvinylacetat-Copolymerisats gemäß DE-A 44 45 173, 904 g einer 5%igen Nitrocelluloselösung in THF/Dioxan (1:1) mit einem K-Wert von ca. 110, 1220 g eines cobaltdotierten Eisenoxids (Hc = 58 kA/m, BET-Oberfläche 26 m²/g), 116 g eines Aluminiumoxids (BET-Oberfläche 10 m²/g), 113 g eines leitfähigen Rußes (BET-Oberfläche 200 m²/g) und 58 g Fettsäureester eingefüllt und 14 Stunden dispergiert. Die Dispersion wurde unter Druck filtriert und unmittelbar vor dem Auftragen mit einer Trockendicke von 0,8 mm auf eine 75 mm dicke Polyethylenterephthalatfolie unter Rühren mit, bezogen auf 100 Teile Dispersion, 20 Teilen einer 50%igen Lösung eines Triisocyanats aus 3 Mol Toluylendiisocyanat und 1 Mol Trimethylolpropan in THF/Dioxan (1:1) versehen. Die beidseitig beschichtete Folie wurde bei Temperaturen zwischen 50 und 80°C getrocknet und durch Hindurchführen zwischen beheizten Walzen unter Druck (Liniendruck 200 kg/cm) geglättet.

Die Meßergebnisse sind in Tabelle 1 zusammengefaßt.

### Vergleichsbeispiel 2

Es wurde wie in Beispiel 2 verfahren, jedoch wurde das Polymere VI durch ein handelsübliches Dispergiermittel auf Basis eines sauren Phosphorsäureesters eines Fettalkoxylats und das Polymere XIV durch ein handelsübliches Polyurethan ohne ionische Gruppen ersetzt.

Aus dem so erhaltenen magnetischen Aufzeichnungsträger wurden kreisförmige Flexidisks mit einem Durchmesser von 3,5 Zoll (8,89 cm) ausgestanzt und den üblichen Prüfungen unterzogen.

Die Meßergebnisse sind in Tabelle 1 zusammengefaßt.

### Glanzmessung:

Die Glanzmessung wurde mit einem Dr. Lange-Reflektometer (Hersteller: Erichsen GmbH&Co.KG, Hemer-Sundwig) nach Betriebsanleitung unter einem Winkel von 60° durchgeführt. Dabei ist die Dispergierung umso besser, je höher die Glanzwerte liegen. Dabei wurden folgende Werte gemessen:
- Glanz 1:: Glanzwert unmittelbar nach der Dispergierung
- Glanz 2:: Glanzwert nach 24 Stunden Rollbrett
- Glanz 3:: Glanzwert nach 14 Tagen Dispersionslagerung

### Window-Margin:

Window-Margin ist eine relative Meßgröße für die Erkennung eines Datenimpulses. Je höher der Wert ist, umso fehlertoleranter ist das System bezüglich Erkennbarkeit des Datenimpulses, dem sogenannten Datenfenster.

### Peak-Shift:

Peak-Shift ist die zeitliche Differenz zwischen der Sollage eines einzelnen Datenimpulses und der tatsächlichen Lage, jeweils gemessen bei der Maximalamplitude.

### Beispiel 2

In einer Rührwerkskügelmühle, gefüllt mit 1,08 kg keramischer Kugeln mit einem Durchmesser zwischen 1 und 1,5 mm, wurden 7100 g eines Gemisches THF/Dioxan (1:1), 1520 g einer 50%igen Lösung eines Polyurethans als Polymer VI gemäß US-A 4 568 612 (Beispiel 1) mit einer Hydroxylzahl von 45 mg KOH/g in Tetrahydrofuranen VI, 445 g einer 25 %-igen Lösung eines kationischen Polymeren XIV gemäß DE-A 44 33 931, (Polymer A, Beispiel 1) in THF, 1045 g einer 16,5%igen Lösung eines kationischen Polyurethans gemäß DE-A 44 45 173 (Polymer B) in THF/Dioxan (1:1), 2800 g ferromagnetischen Chromdioxids mit einer Koerzitivfeldstärke von 50 kA/m, 1860 g eines cobaltdotierten Eisenoxids mit einer Koerzitivfeldstärke von 50 kA/m, 57,4 g eines leitfähigen Rußes, 33 g eines sphärischen Aluminiumoxids, 79 g eines Metallsalzes einer Ölsäure und 56 g eines Gemisches aus Fettsäuren und Fettsäureestern eingefüllt und 12 Stunden dispergiert. Die Dispersion wurde unter Druck filtriert und unmittelbar vor dem Auftragen auf eine 15 mm dicke Polyethylenterephthalatfolie unter Rühren mit, bezogen auf 1 Teil Dispersion, 0,03 Teilen einer 50%igen Lösung eines Triisocyanats aus 3 Mol Toluylendiisocyanat und 1 Mol Trimethylolpropan in THF/Dioxan (1:1) versehen. Die beschichtete Folie wurde nach dem Durchlaufen eines Magnetfeldes zur Ausrichtung der Pigmente in Laufrichtung der Folie bei Temperaturen zwischen 50 und 80°C getrocknet und durch Hindurchführen zwischen beheizten Walzen unter Druck (Liniendruck 150 kg/cm) geglättet.

Die Meßergebnisse sind in Tabelle 2 zusammengefaßt.

### Vergleichsbeispiel 3

Es wurde wie in Beispiel 2 verfahren, jedoch wurde das Polyurethan durch das Polyurethan gemäß DE-A 44 45 173 (Polymer A) ersetzt.

Nach dem Schneiden der beschichteten Folie in 1/2 Zoll (12,7 mm) breite Bänder wurden die elektroakustischen und Videodaten sowie die bandmechanischen Eigenschaften gemessen. Als Referenzband für die elektroakustischen Daten wurde das Band VRT2 (Bezugspunkt 0 dB) der Firma Victor Company of Japan verwendet.

Die Meßwerte in Tabelle 2 haben folgende Bedeutung:
HF-Pegel:
   Hochfrequenzpegel
Videostörabstand S/N:
   Verhältnis des Luminanzsignals (Helligkeitssignals) eines 100%igen Weißbildes zum Rauschpegel.
FSM:
   Farbstörmodulation

**Tabelle 1**

| | Beispiel | Vgl.-Bsp. 1 | Vgl.-Bsp. 2 |
|---|---|---|---|
| Dispergierdauer [h] | 10 | 12 | 20 |
| Glanz 1 | 88 | 84 | 58 |
| Glanz 2 | 88 | 80 | 31 |
| Glanz 3 | 86 | 78 | 30 |

| Oberflächenfehler: | | | |
|---|---|---|---|
| Nach Dispergierung | 0 Warzen/mm² | 0 Warzen/mm² | 2 Warzen/mm² |
| Nach 3 Tagen | 0 Warzen/mm² | 3 Warzen/mm² | 6 Warzen/mm² |
| Nach 7 Tagen | 1 Warze/mm² | 10 Warzen/mm² | 10 Warzen/mm² |

**Tabelle 2**

| | Beispiel 2 | | | Vergleichsbeispiel 3 | | |
|---|---|---|---|---|---|---|
| Beschichtung | nach Disperg. | nach 3 Tagen | nach 7 Tagen | nach Disperg. | nach 3 Tagen | nach 7 Tagen |
| HF-Pegel | 2,3 | | | 1,6 | | |
| S/N | 2,7 | | | 2,1 | | |
| FSM | -2,4 | | | -3,5 | | |
| Abrieb am Videokopf | 1 | 1 | 1,5 | 1 | 1,5 | 2 |
| Warzen/mm² | 0 | 1 | 2 | 1 | 4 | 15 |
| Glanz | 97 | 96 | 95 | 96 | 89 | 85 |

## Patentansprüche

1. Magnetische Aufzeichnungsträger I, enthaltend ein nichtmagnetisches Trägermaterial II und eine magnetisierbare Schicht III, wobei die magnetisierbare Schicht III ferromagnetische Pigmente IV und ein System aus polymeren Massen V enthält, wobei das System aus polymeren Massen V
a) 3 bis 35 Gew.-% eines Polymerisats VI erhältlich durch Umsetzung von
1) einem Polymerisat VII aus
a) 80 bis knapp 100 mol-% eines C₁-C₂₅-Alkylesters einer a,b-ungesättigten Carbonsäure,
b) 0 bis 20 mol-% eines oder mehrerer weiterer Monomerer und
c) einem Starter und/oder Regler, durch welchen die Mehrzahl der Polymerketten des Polymerisats VII an einem ihrer Enden durch eine Hydroxylgruppe terminiert wird,
2) mit einem mehrwertigen nicht-aromatischen Isocyanat VIII zu einem Umsetzungsprodukt IX, wobei die Menge der Isocyanatgruppen 1,2 bis 3,9 mol pro Mol der Hydroxylgruppen von VII beträgt,
3) Umsetzung von IX mit
a) einer gegenüber Isocyanaten reaktive Gruppen enthaltenden Verbindung X zu einem Umsetzungsprodukt XI, wobei die Menge der reaktiven Gruppen 2 bis 7 mol pro Mol der in IX noch vorhandenen freien Isocyanat-Gruppen beträgt
und
Umsetzung von XI mit einer Verbindung XII zum Polymerisat VI, die mit den noch freien reaktiven Gruppen in XI reagiert und durch welche ionische oder ionogene Gruppen in XI eingeführt werden,
oder
b) einer gegenüber Isocyanaten reaktive Gruppen enthaltenden Verbindung XIII, durch die ionische oder ionogene Gruppen in IX eingeführt werden, zum Polymerisat VI
und
b) 5 bis 97 Gew.-% eines basische Gruppen enthaltenden Polymeren XIV mit einem Molekulargewicht von 30000 bis 2000000, erhältlich durch Umsetzung von
1) einem polymeren Diol XV mit einem Molekulargewicht (Zahlenmittel) von 400 bis 10000, mit
2) 0,3 bis 1 Mol pro Mol des Diols XV eines Diols XVI mit 2 bis 18 Kohlenstoffatomen und
3) 0,01 bis 1 Mol pro Mol des Diols XV eines mehrwertigen Alkohols XVII mit mindestens drei OH-Gruppen und 3 bis 25 Kohlenstoffatomen,
4) 1,3 bis 13 Mol pro Mol des Diols XV eines Diisocyanats XVIII mit 6 bis 30 Kohlenstoffatomen und
5) 0,09 bis 2 Mol pro Mol des Diols XV eines Aminoalkohols XIX mit 2 bis 16 Kohlenstoffatomen,
wobei das Verhältnis der Summe der OH-Gruppen der Verbindungen XV, XVI und XVII zu den NCO-Gruppen der Verbindung XVIII zu den Aminogruppen der Verbindung XIX 1 : 1,03 bis 1,3 : 0,03 bis 0,3 beträgt,
enthält, wobei die Summe der Gewichtsanteile der Polymerisate VI und VII an dem System V 40 bis 100 Gew.-% beträgt.

2. Magnetische Aufzeichnungsträger I nach Anspruch 1 enthaltend ein System aus polymeren Massen V, wobei das System aus polymeren Massen V
a) 5 bis 25 Gew.-% eines Polymerisats VI,
b) 15 bis 60 Gew.-% eines Polymerisats XIV, und
c) 15 bis 60 Gew.-% einer polymeren Masse XX ohne ionische oder ionogene Gruppen, ausgewählt aus der Gruppe bestehend aus Polyurethanen, Polyvinylchlorid, Polyvinylformalen, Polyvinylchlorid-Polyvinylformal-Copolymeren, Phenoxyharzen, Nitrocellulose, Celluloseestern organischer Carbonsäuren sowie Mischungen solcher Verbindungen,
bezogen auf das Gesamtgewicht des Systems V enthält.
